# EUROPEAN PATENT APPLICATION

(11) **EP 2 733 408 A1**
(43) Date of publication of application: **21.05.2014**
(21) Application number: 12193406.1
(22) Date of filing: 20.11.2012
(51) Int. Cl.: F16M 11/12, B25J 17/00, F16M 11/18, F16M 11/20

(54) **Robot neck joint structure**

(71) Applicant: Future Robot Co., Ltd., Seongnam-si, Gyeonggi-do 463-828 (KR)
(72) Inventor: Song, Se Kyong, 463-060 Gyeonggi-do (KR); La, Jong Shin, 142-077 Seoul (KR)
(74) Representative: Engelhard, Markus

(57) **Abstract**

The present invention relates to a robot neck joint structure including: a head plate (5) of a robot; a rolling drive unit (10) for supporting the head plate and performing a rolling motion in a left and right direction; a pitching drive unit (30) for supporting the rolling drive unit and the head plate and performing a pitching motion in a forward and backward direction; and a yawing drive unit (50) for supporting the pitching drive unit, the rolling drive unit and the head plate and performing axial rotation at the same place. Therefore, since composite movements such as rolling, pitching and yawing of a head plate are allowed in order to implement motions like movement of a head of a human being, motions and expressions similar to the movement of a head of a human being can be implemented, and familiarity of persons to robots can be increased by stimulating interest and curiosity about the robots through a variety of performances.

## Description

### BACKGROUND OF THE INVENTION

### Field of the Invention

The present invention relates to a robot neck joint structure, and more specifically, to a robot neck joint structure, in which since composite movements such as rolling, pitching and yawing of a head plate are allowed in order to implement motions like movement of a head of a human being, motions and expressions similar to the movement of a head of a human being can be implemented, and familiarity of persons to robots can be increased by stimulating interest and curiosity about the robots through a variety of performances.

### Background of the Related Art

With the advancement in science and technologies, robots walking and talking like a human being are proposed by making models similar to the human being.

In addition to this, the technologies have been developed such that the face of a robot makes an expression such as smiling like a human being or the robot mimics detailed motions, such as making a bow by bending the head downward, shaking the head or the like, by applying a neck joint structure.

For example, among the technologies, a robot moving the head using a neck joint apparatus will be described below briefly.

According to Korean Patent Publication No. 2009-118542, in a human-like robot having a neck joint assembly for connecting a body and a head, the neck joint assembly includes a first neck joint apparatus connected to and rotating the head, a second neck joint apparatus for moving the head and the first neck joint apparatus in parallel, and a third neck joint apparatus for rotating the second neck joint apparatus in the yaw direction.

In such a robot of the conventional technique, the first neck joint apparatus includes a first rotation joint of the yaw direction and a second rotation joint of the pitch direction.

In addition, the second neck joint apparatus is configured so as to move the first neck joint apparatus and the head in parallel as a whole, and if the head is moved in parallel through the first neck joint apparatus while the head is moved forward using the second neck joint apparatus, further diverse motions and gestures can be expressed compared with existing robots having only 2 to 3 rotation degrees of freedom.

In addition, the head can be bent downward further more while the head is moved forward, and this is very useful for the robot to identify obstacles right before the feet by bending the head.

In addition, the third neck joint apparatus includes a third rotation joint of the yaw direction, and the third neck joint apparatus rotates the second neck joint apparatus, the first neck joint apparatus and the head in the yaw direction as a whole.

In addition, if the head is moved using the second neck joint apparatus after rotating the head in the yaw direction through the third neck joint apparatus, a motion of moving the head left and right can be performed while the head is rotated to the left or right side.

However, the configuration of such a robot of the conventional technique is complex so as to require a plurality of neck joint apparatuses for a movement such as rotation or parallel movement of the head, and thus a lot of manufacturing cost is required, and the motions give unfamiliar mechanical feelings to a counterpart, and thus familiarity is lowered. In addition, if the power is turned off, the neck is inclined.

### SUMMARY OF THE INVENTION

Therefore, the present invention has been made in view of the above problems, and it is an object of the present invention to provide a robot neck joint structure, in which since composite movements such as rolling, pitching and yawing of a head plate are allowed in order to implement motions like movement of a head of a human being, motions and expressions similar to the movement of a head of a human being can be implemented, and familiarity of persons to robots can be increased by stimulating interest and curiosity about the robots through a variety of performances.

Another object of the present invention is to provide a robot neck joint structure, which is appropriate for manufacturing a human robot modeled after the shape of a human being owing to a simple and compact structure, and since the number of components can be minimized, the robot can be manufactured at a low cost while minimizing minor troubles in a product, and thus reliability of the product is improved.

To accomplish the above objects, according to one aspect of the present invention, there is provided a robot neck joint structure comprising: a head plate of a robot; a rolling drive unit for supporting the head plate and performing a rolling motion in a left and right direction; a pitching drive unit for supporting the rolling drive unit and the head plate and performing a pitching motion in a forward and backward direction; and a yawing drive unit for supporting the pitching drive unit, the rolling drive unit and the head plate and performing axial rotation at a same place.

Here, the rolling drive unit includes: a rolling bracket for supporting the head plate; a first actuator installed in the rolling bracket to provide power; and a first shaft rotating while being engaged with an output axis of the first actuator and providing a rotation center axis of the rolling bracket rotating together with the first actuator.

In addition, the pitching drive unit may include: a pitching bracket; a second actuator installed in the pitching bracket to provide power; and a second shaft rotating while being engaged with an output axis of the second actuator and providing a rotation center axis of the rolling drive unit and the head plate rotating together with the second shaft.

In addition, the second shaft may be combined to be perpendicular to the first shaft.

Particularly, the second shaft 34 is inserted perpendicularly into the first shaft 14 not to be rotated freely.

In addition, the yawing drive unit may include: a yawing bracket; a third actuator installed in the yawing bracket to provide power; and a third shaft, one end of which rotates while being engaged with an output axis of the third actuator using a gear, and the other end of which is combined with the pitching bracket to provide a rotation center axis of the pitching drive unit, the rolling drive unit and the head plate rotating together with the third shaft.

### BRIEF DESCRIPTION OF THE DRAWINGS

FIG. 1 is a perspective view showing a robot neck joint structure from the front side according to an embodiment of the present invention.

FIG. 2 is a perspective view showing a robot neck joint structure from the rear side according to an embodiment of the present invention.

FIG. 3 is an exploded perspective view showing a robot neck joint structure according to an embodiment of the present invention.

FIG. 4 is a view schematically showing a rolling motion of a robot head unit according to a robot neck joint structure of the present invention.

FIG. 5 is a view schematically showing a pitching motion of a robot head unit according to a robot neck joint structure of the present invention.

FIG. 6 is a view schematically showing a yawing motion of a robot head unit according to a robot neck joint structure of the present invention.

### DESCRIPTION OF SYMBOLS

- 5: Head plate: 10: Rolling drive unit
- 11: Rolling bracket: 13: First actuator
- 14: First shaft: 30: Pitching drive unit
- 31: Pitching bracket: 33: Second actuator
- 34: Second shaft: 50: Yawing drive unit
- 51: Yawing bracket: 53: Third actuator
- 53a: Driving gear: 54: Third shaft
- 54a: Driven gear: 55: Bearing block

### DETAILED DESCRIPTION OF THE PREFERRED EMBODIMENT

The preferred embodiments of the invention will be hereafter described in detail, with reference to the accompanying drawings.

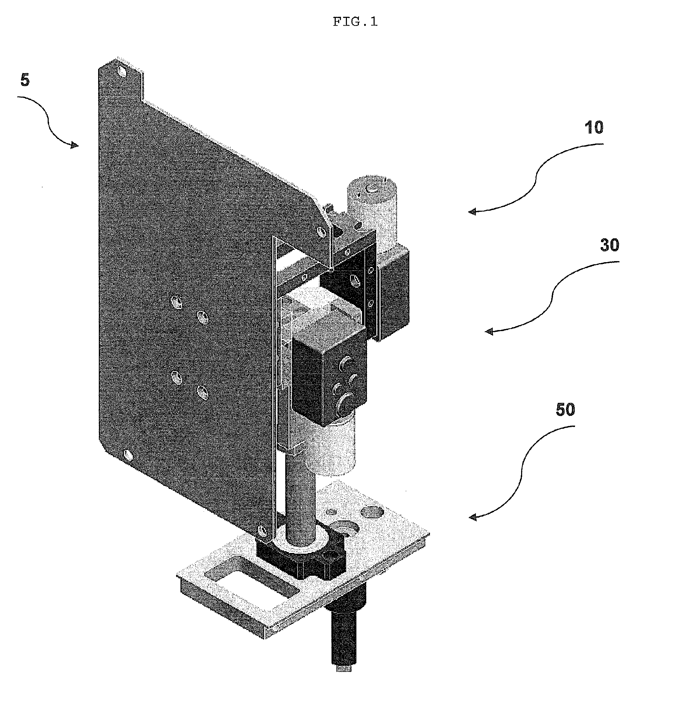

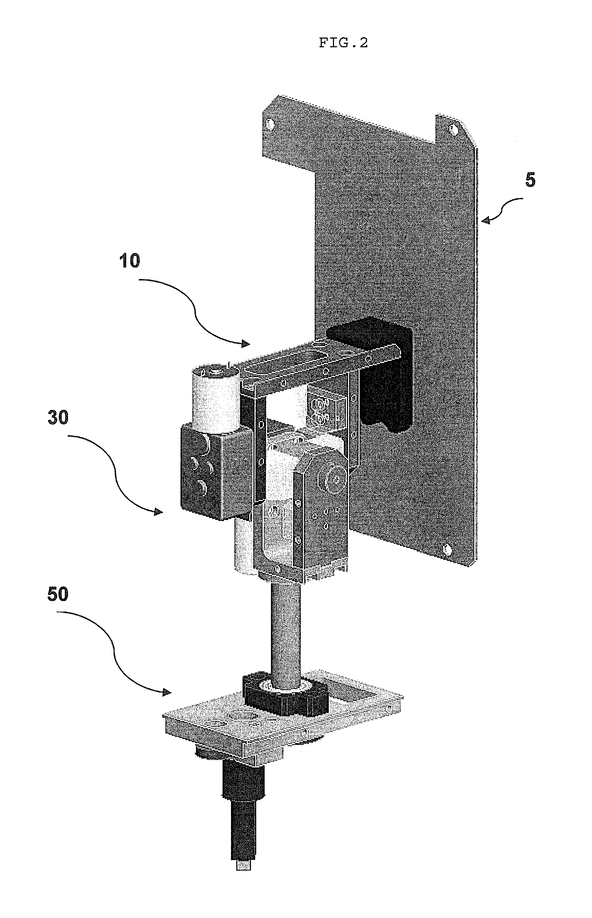

FIG. 1 is a perspective view showing a robot neck joint structure from the front side according to an embodiment of the present invention, and FIG. 2 is a perspective view showing a robot neck joint structure from the rear side according to an embodiment of the present invention.

Referring to FIGs. 1 and 2, the robot neck joint structure according to an embodiment of the present invention includes a head plate 5 of a robot, a rolling drive unit 10 for supporting the head plate 5 and performing a rolling motion in the left and right direction, a pitching drive unit 30 for supporting the rolling drive unit 10 and the head plate 5 and performing a pitching motion in the forward and backward direction, and a yawing drive unit 50 for supporting the pitching drive unit 30, the rolling drive unit 10 and the head plate 5 and performing axial rotation at the same place.

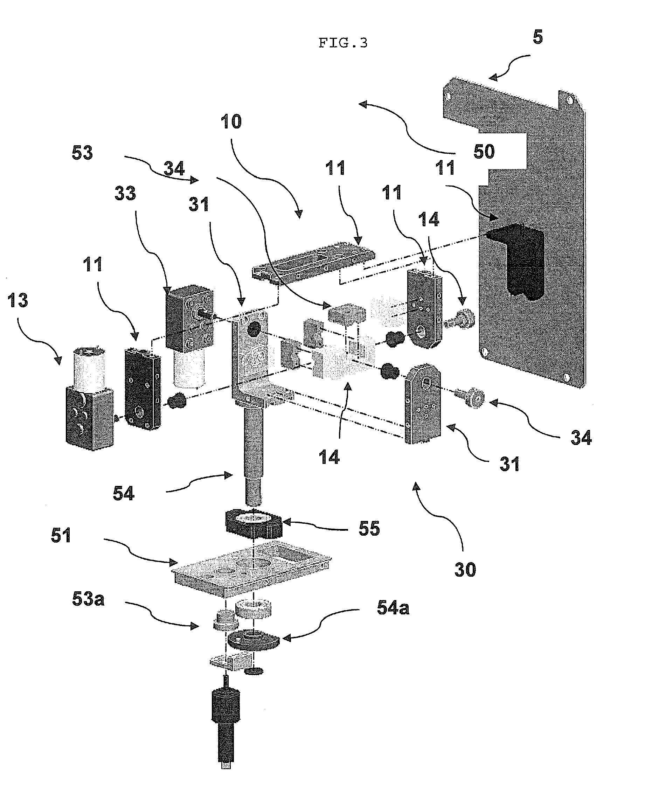

Hereinafter, each constitutional component will be described in further detail with reference to FIG. 3.

FIG. 3 is an exploded perspective view showing a robot neck joint structure according to an embodiment of the present invention.

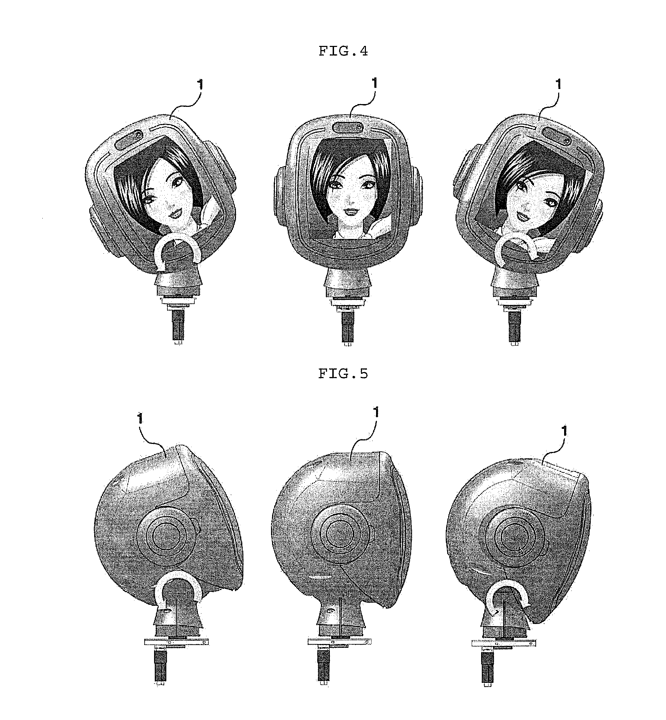

Referring to FIG. 3, there is provided the head plate 5. The head plate 5 is used as a structure for configuring a head unit 1 of a human robot (refer to FIGs. 4 to 6) on the front side.

At this point, the head unit can be embodied by modeling the ears, eyes, mouth and nose of a human being or formed by mimicking functions thereof.

Such a head plate 5 can be manufactured in a plate shape using a metal plate, and particularly, it can be manufactured in the shape of "T" or "I".

The head plate 5 is installed so as to perform a rolling motion in the left and right direction by the rolling drive unit 10.

The rolling drive unit 10 is described below.

The rolling drive unit 10 is provided with a rolling bracket 11 for supporting the head plate 5. The rolling bracket 11 can be configured as a support structure of a 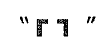 shape opened toward the bottom side, and it can be configured as a single bracket or an assembly of a plurality of brackets.

At this point, a first actuator 13 and a first shaft 14 are installed inside the 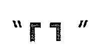 -shaped depression of the rolling bracket 11 in parallel.

A motor can be used as the first actuator 13.

In addition, the first shaft 14 can be installed to the first actuator 13 in parallel.

At this point, a sensor unit (not shown) for detecting and controlling output of the first actuator 13 can be further installed, and a potentiometer or an encoder can be used as the sensor unit.

Both ends of the first shaft 14 are rotatably connected between the both sides of the rolling bracket 11 using a bearing or bushing, and the output terminal of the first actuator is fixed to the rolling bracket 11.

If the first actuator 13 rotates in this state, the first shaft 14 rotates together. At this point, the rolling drive unit 10 and the head plate 5 including the first actuator 13 rotate as a whole by limiting rotation of the body of the first shaft 14.

At this point, the first shaft 14 provides a rotation center axis of the rolling bracket 11 rotating together with the first actuator 13.

As shown in FIGs. 1 to 3, a second shaft 34 of the pitching drive unit 30 is installed in the manner of cutting through the rotation axis of the first shaft 14, and thus rotation of the body of the first shaft 14 is prevented.

The configuration of the pitching drive unit 30 is described in detail.

The pitching drive unit 30 supporting the rolling drive unit 10 is provided with a pitching bracket 31.

The pitching bracket 31 can be configured as a support structure of a 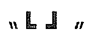 shape opened toward the top side, and it can be configured as a single bracket or an assembly of a plurality of brackets.

At this point, a second shaft 34 and a second actuator 33 are installed inside the 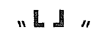 -shaped depression of the pitching bracket 31 to be parallel to the vertical direction of the rotation axis of the first shaft 14. As shown in FIG. 3, the second shaft 34 is inserted perpendicularly into the first shaft 14 not to be rotated freely. Thus the second shaft 34 rotates with the rolling drive unit 10 including the first shaft 14.

The second actuator 33 is installed in the pitching bracket 34 and provides power, and a motor can be used as the second actuator 33.

At this point, the second shaft 34 can be installed to the second actuator 33 in parallel.

At this point, a sensor unit (not shown) for detecting and controlling output of the second actuator 33 can be further installed, and a potentiometer or an encoder can be used as the sensor unit.

Both ends of the second shaft 34 are rotatably connected between the both sides of the pitching bracket 31 using a bearing or bushing, and the output terminal of the second actuator 33 is fixed to the pitching bracket 31.

If the second actuator 33 rotates in this state, the second shaft 34 rotates together. At this point, the first shaft 14 combined with the body of the second shaft 34, the rolling drive unit 10 and the head plate 5 rotate all together.

The pitching drive unit 30 is supportedly installed on the yawing drive unit 50 in a state capable of performing axial rotation at the same place.

Hereinafter, the yawing drive unit 50 will be described.

The yawing drive unit 50 having a third shaft 54 for supporting the pitching drive unit 30 is provided with a yawing bracket 51. The yawing bracket 51 can be manufactured in the shape of a plate, and a third actuator 53 is installed on the bottom of the yawing bracket 51 and provides power.

At this point, a driving gear 53a is formed at the output terminal of the third actuator 53, and the third shaft 54 which receives the power from the third actuator 53 and rotates thereby is extendedly installed to penetrate the top surface of the yawing bracket 51.

At this point, the third shaft 54 can be firmly axis-fixed on the yawing bracket 51 using a bearing block 55.

In addition, a driven gear 54a rotating while being engaged with the driving gear 53a of the third actuator 53 is installed at the input terminal.

The pitching bracket 31 is combined with the output terminal of the third shaft 54 and rotates together. At this point, the third shaft 54 provides a rotation center axis of the pitching drive unit 30, the rolling drive unit 10 and the head plate 10.

At this point, a sensor unit (not shown) for detecting and controlling output of the third actuator 53 can be further installed in the yawing drive unit 50, and a potentiometer or an encoder can be used as the sensor unit.

The robot neck joint structure of the present invention configured as described above can be applied to the head unit 1 of a robot as shown in FIGs. 4 to 6 and implement motions such as moving the head of a human being.

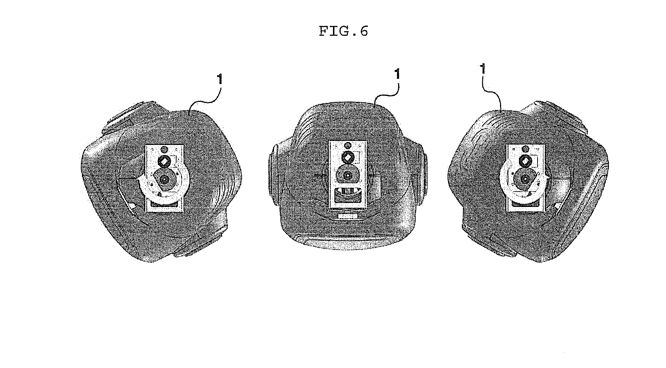

FIG. 4 is a view schematically showing a rolling motion of a robot head unit according to a robot neck joint structure of the present invention, FIG. 5 is a view schematically showing a pitching motion of a robot head unit according to a robot neck joint structure of the present invention, and FIG. 6 is a view schematically showing a yawing motion of a robot head unit according to a robot neck joint structure of the present invention.

Since the present invention allows composite movements such as rolling, pitching and yawing, motions and expressions similar to movement of a head of a human being can be implemented, and familiarity of persons to robots can be increased by stimulating interest and curiosity about the robots through a variety of performances.

In addition, the robot neck joint structure of the present invention is appropriate for manufacturing a human robot modeled after the shape of a human being owing to a simple and compact structure, and since the number of components can be minimized, the robot can be manufactured at a low cost while minimizing minor troubles in a product, and thus reliability of the product is improved.

As described above, the robot neck joint structure according to an embodiment of the present invention is effective in that since composite movements such as rolling, pitching and yawing of a head plate are allowed in order to implement motions like movement of a head of a human being, motions and expressions similar to movement of a head of a human being can be implemented, and familiarity of persons to robots can be increased by stimulating interest and curiosity about the robots through a variety of performances.

The robot neck joint structure of the present invention is appropriate for manufacturing a human robot modeled after the shape of a human being owing to a simple and compact structure, and since the number of components can be minimized, the robot can be manufactured at a low cost while minimizing minor troubles in a product, and thus reliability of the product is improved.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A robot neck joint structure comprising:
a head plate 5 of a robot;
a rolling drive unit 10 for supporting the head plate 5 and performing a rolling motion in a left and right direction;
a pitching drive unit 30 for supporting the rolling drive unit 10 and the head plate 5 and performing a pitching motion in a forward and backward direction; and
a yawing drive unit 50 for supporting the pitching drive unit 30, the rolling drive unit 10 and the head plate 5 and performing axial rotation at a same place.

2. The structure according to claim 1, wherein the rolling drive unit 10 includes:
a rolling bracket 11 for supporting the head plate 5;
a first actuator 13 installed in the rolling bracket 11 to provide power; and
a first shaft 14 rotating while being engaged with an output axis of the first actuator 13 and providing a rotation center axis of the rolling bracket 11 rotating together with the first actuator 13.

3. The structure according to claim 2, wherein the pitching drive unit 30 includes:
a pitching bracket 31;
a second actuator 33 installed in the pitching bracket 31 to provide power; and
a second shaft 34 rotating while being engaged with an output axis of the second actuator 33 and providing a rotation center axis of the rolling drive unit 10 and the head plate 5 rotating together with the second shaft 34.

4. The structure according to claim 3, wherein the second shaft 34 is combined to be perpendicular to the first shaft 14.

5. The structure according to claim 4, wherein the second shaft 34 is inserted perpendicularly into the first shaft 14 not to be rotated freely.

6. The structure according to claim 3, wherein the yawing drive unit 50 includes:
a yawing bracket 51;
a third actuator 53 installed in the yawing bracket 51 to provide power; and
a third shaft 54, one end of which rotates while being engaged with an output axis of the third actuator 53 using a gear, and the other end of which is combined with the pitching bracket 31 to provide a rotation center axis of the pitching drive unit 30, the rolling drive unit 10 and the head plate 5 rotating together with the third shaft 54.
